# EUROPEAN PATENT APPLICATION

(11) **EP 4 335 604 A2**
(43) Date of publication of application: **13.03.2024**
(21) Application number: 23189943.6
(22) Date of filing: 07.08.2023
(51) Int. Cl.: B28D 7/04, B65G 49/06, C03B 33/02

(54) **DEVICE FOR SUPPORTING AND REFERENCING SHEETS IN A VERTICAL POSITION AND SYSTEM**

(30) Priority: 09.09.2022 IT 202200018441
(71) Applicant: Denver S.p.A., 47892 Gualdicciolo (SM)
(72) Inventor: GIANNONI, Federico, ACQUAVIVA (SM); TARDINI, Valentino, RICCIONE (Rimini) (IT); LEONARDI, Paolo, Misano Adriatico (Rimini) (IT); GIORGETTI, Bruno, Rimini (IT)
(74) Representative: Puggioli, Tommaso

(57) **Abstract**

Described is a device for supporting and referencing a sheet (L) having a predetermined shape (s) and positioned in a substantially vertical plane, said device comprising:
- a vertical support (3) extending along the vertical direction,
- a lateral reference unit (30) connected to the vertical support (3),
- a horizontal support (2) extending along a horizontal direction,
- a first lower contact unit (10) connected to the horizontal support and comprising a first supporting element (11),
- a second lower contact unit (20) connected to the horizontal support (2) and comprising a second supporting element (21),

the first and second supporting elements (11, 21) being configured to make contact, respectively, with a first and a second lower portion (s1, s2) of the edge of the sheet (L),
the first and the second supporting elements (11, 21) and the lateral reference unit (30) define an orientation of the sheet (L) as a function of said shape (s).

## Description

The present invention relates to a device for supporting and referencing sheets in a vertical position, for example sheets made of glass, marble, granite or other types of stone, ceramic materials or synthetic materials, and a system comprising said device.

The vertical machines for machining sheets comprise, in short, a system for supporting and moving the sheets, kept substantially vertical, and a machining station extending vertically.

The supporting and movement system comprises, for example, a roller and a system of suction cups.

The sheets are supported, below, by the roller and, behind, on a frame of the machine.

The system of suction cups picks up the sheet of the roller and moves it towards the processing station.

The suction cups act on the rear face of the sheet for moving it and retaining it at the moment of the machining (for example shaping, grinding, polishing, drilling, milling, squaring, bevelling) in the machining station. The prior art vertical machines operate substantially on sheets which are rectangular in shape or which have at least one rectilinear lower edge. The sheets shaped in this way may be rested with the rectilinear edge on the rollers and then be gripped by the system of suction cups which transport them towards the processing zone, keeping them resting on the lower rollers.

Generally speaking, in a first step, the sheet rests, with its rectilinear edge, on the roller which lowers once the sheet is gripped by the suction cups; in this way, the sheet remains suspended, retained by the suction cups only. Disadvantageously, the prior art vertical machines do not allow the processing of sheets which do not have at least one rectilinear edge, since they cannot be easily rested on the rollers and kept vertical, or referred relative to a work surface, as, on the other hand, occurs in the horizontal machines.

In this context, the need is felt to make a device and a machine which allow the above-mentioned drawbacks to be overcome.

The aim of the invention is to satisfy the above-mentioned need by providing a device and a machine which allow the support and the movement of vertical glass sheets of any geometry.

At least the specified aim is achieved by a device for supporting and referencing vertical sheets and a machine comprising said device according to the independent claims.

According to an aspect of the invention, the invention relates to a device for supporting and referencing a sheet having any shape and positioned along a vertical direction.

In particular, the sheets positioned along the vertical direction are maintained with an inclination of between 0° and 10° and preferably approximately 5° relative to the vertical direction.

The device comprises a vertical support extending along the vertical direction.

The device comprises a lateral reference unit, connected to the vertical support.

The device comprises a horizontal support extending along a horizontal direction.

The device comprises a first lower contact element, connected to the horizontal support, which comprises a first supporting element and a second lower contact element, connected to the horizontal support, which comprises a second supporting element.

The first and second supporting elements are configured to make contact, respectively, with a first and a second lower portion of the edge of the sheet.

Advantageously, the first and the second supporting elements allow the sheet to be supported in a substantially vertical position regardless of the shape of the edge of the sheet.

The first and second supporting elements and the lateral reference unit define an orientation of the sheet as a function of the shape.

In other words, the first and second supporting elements and the lateral reference unit allow a point of origin for the sheet and an orientation of the sheet to be defined.

Advantageously, the first supporting element, the second supporting element and the lateral reference unit allow an orientation of the sheet to be defined.

In an example, the lateral reference unit comprises an electronic reading device to define a positioning of the sheet in the reference system.

The electronic reading device may be, for example, a photocell or a direct reflective sensor.

The term "positioning" means, in other words, the position of the sheet in the reference plane identified by the sheet.

According to an example, the lateral reference unit comprises a contact element configured to come into contact with a lateral portion of an edge of the sheet and define a positioning of the sheet.

Referencing the sheet allows a correct positioning of the sheet considering the subsequent machining and/or movements which it must undergo. According to an aspect, the vertical support comprises a vertical guide extending along the vertical direction and the lateral reference unit is movable along the vertical guide.

The vertical support is preferably positioned perpendicularly to the horizontal support.

According to an example, the horizontal support may be fixed to a lower end of the vertical support considering the device in use, defining a frame of the device.

The horizontal support may comprise fixing systems for fixing the supporting device to a machine tool.

Preferably, the horizontal support comprises a guide extending along the horizontal direction.

According to an aspect, the first and the second lower contact units are movable along the horizontal guide.

According to an aspect, at least one between the first and the second supporting elements is movable along the vertical direction.

Preferably, both of the supporting elements are movable along the vertical direction.

The first lower contact element preferably comprises a first actuator for moving the first supporting element along the vertical direction.

The second lower contact element preferably comprises a second actuator for moving the second supporting element along the vertical direction. The first and the second actuators may be, for example, of a mechanical, pneumatic, hydraulic or electro-mechanical type.

According to an aspect, at least the first supporting element is movable between an operating position at which it is positioned to allow a support of the sheet and a non-operating position at which it is positioned to determine a minimum overall size.

In other words, at the operating position, the first supporting element is positioned in such a way as to guarantee a support of the sheet.

On the other hand, in the non-operating position, the first supporting element is moved away from the sheet and positioned in such a way as to not interfere with any movement and/or processing tools which operate on the sheet.

Advantageously, moving the first supporting element away, determining a minimum overall size, prevents any interferences, during the movement of the sheet, between the first supporting element and the sheet itself. Preferably, the first supporting element is movable between the operating position and the non-operating position by means of a rotation.

For example, in a non-limiting manner, the first supporting element is movable between the operating position and the non-operating position by means of a translation or a roto-translation.

Preferably, both the first and the second supporting elements are movable between an operating position at which they are positioned in such a way as to allow a support of the sheet and a non-operating position at which they are positioned in such a way as to determine a minimum overall size. Preferably, the first and second supporting elements are movable between the operating position and the non-operating position by means of a rotation.

For example, in a non-limiting manner, the first and second supporting elements are movable between the operating position and the non-operating position by means of a translation or a roto-translation.

In order to allow the rotation, the first and the second lateral lower contact units comprise, respectively, a third and a fourth actuator, preferably of the pneumatic type.

According to one aspect, the lateral contact element is movable between an operating position at which it is positioned in such a way as to allow a contact of the sheet and a non-operating position at which it is positioned in such a way as to determine a minimum overall size.

In other words, in the operating position, the lateral contact element is positioned in such a way as to guarantee a lateral contact of the sheet. On the other hand, in the non-operating position, the lateral contact element is moved away from the sheet and positioned in such a way as to not interfere with any processing and/or transport tools which act on the sheet.

Advantageously, moving the lateral contact element away, determining a minimum overall size, prevents any interferences, during the movement of the sheet, between the contact element and the sheet itself.

Preferably, the lateral contact element is movable between the operating position and the non-operating position by means of a rotation.

For example, in a non-limiting manner, the lateral contact element is movable between the operating position and the non-operating position by means of a translation or a roto-translation.

In order to allow the rotation, the lateral reference unit comprises a fifth actuator, preferably of the pneumatic type.

According to an aspect, the first and second lower contact elements and the lateral contact elements comprise, respectively, a first, a second and a third detection device configured for detecting, respectively, a position of the first supporting element, of the second supporting element and of the lateral contact element along the horizontal direction and/or along the vertical direction.

The sensors may, for example, comprise a magnetic strip and a reading head.

The first detection device detects a position along the horizontal direction and/or a position along the vertical direction of the first supporting element. The first detection device preferably comprises a first sensor configured to detect the position of the first unit, and therefore of the first supporting element, along the horizontal direction.

The first sensor may be, for example, a reading head positioned on the first unit, which determines the position of the first unit relative to a horizontal magnetic strip positioned on the horizontal structure.

The first detection device preferably comprises a second sensor configured to detect the position of the first supporting element along the vertical direction.

According to an example, the second sensor may comprise an *encoder.* Two coordinates are therefore associated with the first supporting element. The second detection device detects a position along the horizontal direction and/or a position along the vertical direction of the second supporting element.

Similarly, two coordinates are therefore associated with the second supporting element.

The third detection device detects a position along the vertical direction of the contact element.

Since the third contact element is not movable along the horizontal direction, relative to the vertical structure, the sensor associates only one coordinate.

The third detection device preferably comprises a sensor configured for detecting the position of the contact element along the vertical direction. The sensor may comprise, for example, a reading head positioned on the third unit which determines the position of the contact element relative to a vertical magnetic strip positioned on the vertical structure.

According to an aspect of the invention, the invention relates to a system for machining a glass sheet.

The system comprises a device for supporting and referencing the sheet according to any one of the above-mentioned features.

The system comprises a machine tool which comprises:
- a frame for supporting the sheet in a substantially vertical position,
- a device for moving the sheet being machined along the supporting frame along a feed direction, which comprises at least one gripping suction cup configured for picking up the sheet,
- a station for machining the sheet positioned downstream of the supporting device along the feed direction.

Preferably, the machine comprises a processing and control unit.

The processing and control unit may be in communication with the first and/or with the second actuator for moving the first and/or the second supporting element from a first position to a second position along the vertical direction.

According to an aspect, the processing and control unit is preferably in communication with the third and the fourth actuator of the first and second lower contact units and with the fifth actuator of the lateral reference unit.

According to an aspect, the processing and control unit may be configured to control the rotation of the first supporting element from the operating position to the non-operating position.

According to an aspect, the processing and control unit may be configured to control the rotation of the second supporting element from the operating position to the non-operating position.

According to an aspect, the processing and control unit may be configured to control the rotation of the contact element from the operating position to the non-operating position.

The control unit may be in communication with the gripping suction cup of the movement system.

According to an example, the command and control unit is configured to move the griping suction cup as a function of the barycentre of the sheet and of a centre of the suction cup.

According to an aspect, the system may comprise a handling robot comprising a body, an arm extending from the body and a plurality of suction cups supported by the arm.

According to an example, the supporting and referencing device is located on the machine tool.

According to this example, the processing and control unit is in communication with the handling robot and is configured for controlling a movement of the arm and an actuation of the plurality of suction cups for positioning, using the handling robot, the sheet on the supporting device.

The subsequent steps in the system made in this way therefore comprise:
- moving the first and the second lower contact units along the horizontal direction,
- moving the first and second supporting elements along the vertical direction,
- moving the contact unit along the vertical direction,
- positioning the sheet on the supporting and reference device, for example by means of the handling robot,
- actuating the at least one gripping suction cup for picking up the sheet from the reference supporting device and moving the sheet towards the processing station.

According to an example, the supporting and referencing device is positioned close to the machine.

In this case, the processing and control unit is in communication with the robot and is configured for controlling a movement of the arm and an actuation of the plurality of suction cups for picking up the sheet from the device and positioning it directly against the suction cup of the movement device.

The subsequent steps in the system made in this way therefore comprise:
- moving the first and the second lower contact units along the horizontal direction,
- moving the first and second supporting elements along the vertical direction,
- moving the contact unit along the vertical direction,
- picking up from the supporting and reference device the sheet, for example by means of the handling robot for positioning it against the at
least one suction cup.

According to an example, the system may comprise a device for supporting the sheet positioned downstream of the machining station according to the feed direction to support the machined sheet, comprising a horizontal structure and two lower contact units configured to come into contact with a portion of lower edge.

According to an aspect, the invention relates to a method for orienting a sheet by means of a system for machining a sheet according to any one of the above-mentioned features, said method comprising the steps of:
- picking up and positioning the sheet at the supporting and referencing device,
- defining an orientation of the sheet, as a function of the shape of the sheet, by means of the supporting and referencing device,
- positioning the oriented sheet against the at least one suction cup configured to retain the sheet.

According to an embodiment, the method comprises a step of positioning a handling robot comprising a body, an arm and a plurality of suction cups. According to an embodiment, the step of picking up and positioning the sheet at the supporting and referencing device preferably comprises a step of picking up the sheet by means of the handling robot and releasing it at the supporting and referencing device.

In an embodiment, the step of positioning the oriented sheet L against the at least one gripping suction cup 53 configured for retaining the sheet L, comprises a step of picking up by means of the handling robot 60 the sheet L from the supporting and referencing device 1 and releasing it against the at least one suction cup 53 of the machine tool 50.

The features of the invention are more apparent from the detailed description which follows, with reference to the accompanying drawings which illustrate a preferred embodiment of the invention purely by way of non-limiting example, and in which:
- Figure 1 is a schematic front view of a device for supporting and referencing a sheet according to this invention;
- Figures 2A and 2B are a front and perspective view of a schematic view of a device for supporting and referencing a sheet according to the invention;
- Figures 3A and 3B illustrate, respectively, a perspective view and a side view of a lower contact unit of the supporting and referencing device in a first configuration,
- Figure 4 is a side view of a lower contact element of the supporting and referencing device according to a second configuration,
- Figures 5 to 8 illustrate schematic front views of embodiments of a system for machining a glass sheet according to the invention.

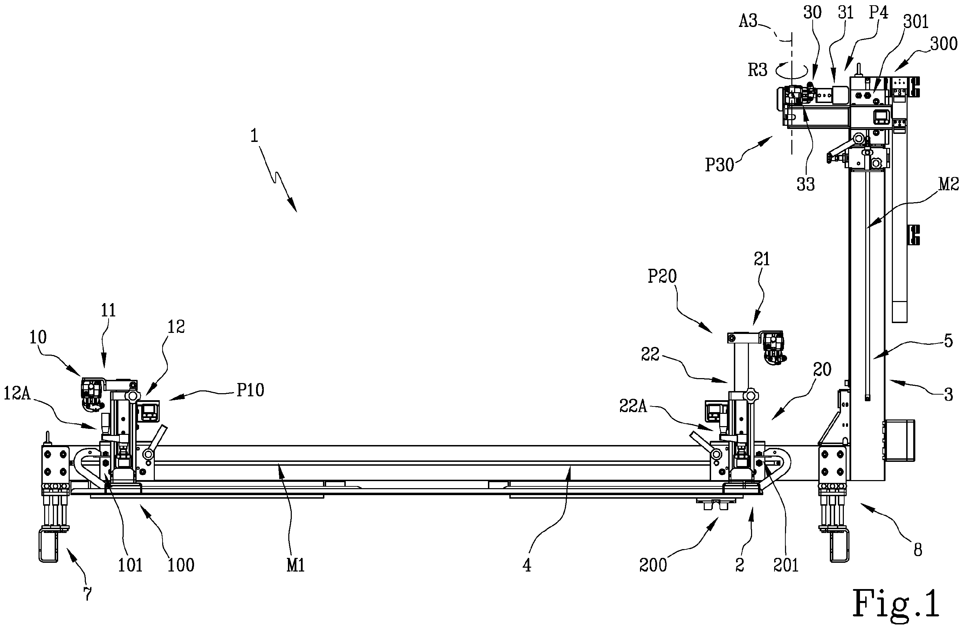

The numeral 1 in Figure 1 denotes a device for supporting and referencing a sheet L having any predetermined shape s and positioned along a vertical direction.

The sheet L can be, for example, a sheet made of glass, marble, granite or other types of stone, ceramic materials or synthetic materials.

The device 1 comprises a vertical support 3 extending along the vertical direction.

The device 1 comprises a lateral reference unit 30 connected to the vertical support 3.

According to a preferred embodiment, the vertical support 3 comprises a vertical guide 5 extending along the vertical direction.

According to a preferred embodiment, the lateral contact unit 30 is movable along the vertical guide 5.

The device 1 comprises a vertical support 2 extending along the vertical direction.

The device 1 comprises a first lower contact unit 10, connected to the horizontal support 2, which comprises a first supporting element 11.

The supporting element 11 is configured to come into contact with a lower portion s1 of an edge s of the sheet L.

The device 1 comprises a second lower contact unit 20, connected to the horizontal support 2, which comprises a second supporting element 21. The supporting element 21 is configured to come into contact with a lower portion s2 of an edge s of the sheet L.

The first and the second supporting elements 11, 21 and the lateral reference unit 30 define an orientation of the sheet L as a function of said shape s.

The first and second supporting elements 11, 21 and the unit 30 allow an origin and an orientation for the sheet to be identified for referencing the sheet.

According to an embodiment not illustrated, the lateral reference unit 30 comprises an electronic reading device 70 such as, for example, a photocell.

The electronic reading device allows a positioning of the sheet in the reference plane to be defined.

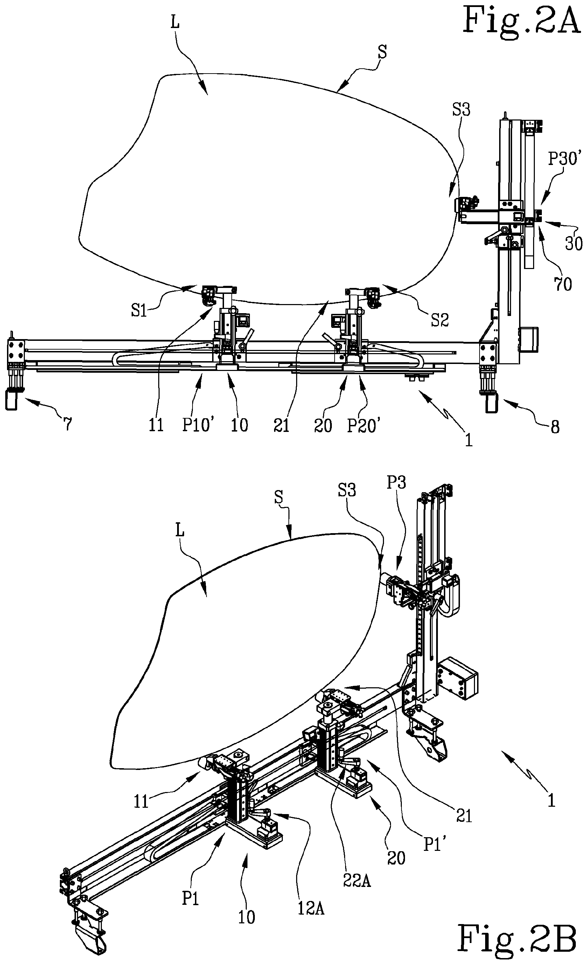

According to an embodiment illustrated in the Figures 1, 2A, 2B, the lateral reference unit 30 comprises a lateral contact element 31 configured to come into contact with a lateral portion s3 of an edge s of the sheet L. The horizontal support 4 comprises a horizontal guide 4 extending along the horizontal direction and the lower contact units 10 and 20 are movable along the horizontal guide 4.

According to an embodiment, the device 1 comprises coupling means 7, 8 for coupling the horizontal support 2 and/or the vertical support 3, for example, to a machine tool.

At least one between the first and the second supporting elements 11, 21 is movable along the vertical direction.

Preferably, both the supporting elements 11 and 21 are movable along the vertical direction.

According to an embodiment, the first lower contact element 10 comprises a first actuator 12 for moving the first supporting element 11 along the vertical direction.

The first actuator 12 may be, for example, manual or motor-driven.

The unit 10 may, for example, comprise a crank 12A for moving the first supporting element 11 along the vertical.

According to an embodiment, the second lower contact element 20 comprises a second actuator 22 for moving the second supporting element 21 along the vertical direction.

The second actuator 22 may be, for example, manual or motor-driven. The unit 20 may, for example, comprise a crank 22A for moving the first supporting element 21 along the vertical.

According to a preferred embodiment, the first and the second units 10, 20 have the same features.

According to an embodiment, at least the first supporting element 11 is movable between an operating position P1 at which it allows a support of the sheet and a non-operating position P2 at which the first element 11 is positioned in such a way as to determine a minimum overall size. Preferably, the first supporting element 11 is movable between the operating position P1 and the non-operating position P2 by means of a rotation R1.

The rotation R1 takes place about a horizontal axis A1.

According to an embodiment, in order to pass from the operating position P1 to P2, the supporting element 11 performs a rotation substantially of 90°.

In the position P1, the supporting element 11 is positioned in such a way as to guarantee a support for the sheet L.

In the position P2, the supporting element 11 is positioned in such a way as to not interfere with any tools for moving or machining the sheet or with the sheet itself.

Preferably, both the supporting elements 11, 21 are movable between an operating position P1, P1' at which they are positioned in such a way as to allow a support of the sheet and a non-operating position P2, P2' at which they are positioned in such a way as to determine a minimum overall size. Preferably, the second supporting element 21 is movable between the operating position P1' and the non-operating position P2' by means of a rotation R2.

The rotation R2 takes place about a horizontal axis A2.

According to an embodiment, the lateral contact element 31 is movable between an operating position P3 at which it is positioned to allow a contact of the sheet and a non-operating position P4 at which it is positioned to determine a minimum overall size.

Preferably, the contact element 31 is movable between the operating position P3 and the non-operating position P4 by means of a rotation R3. The rotation R3 takes place about a vertical axis A3.

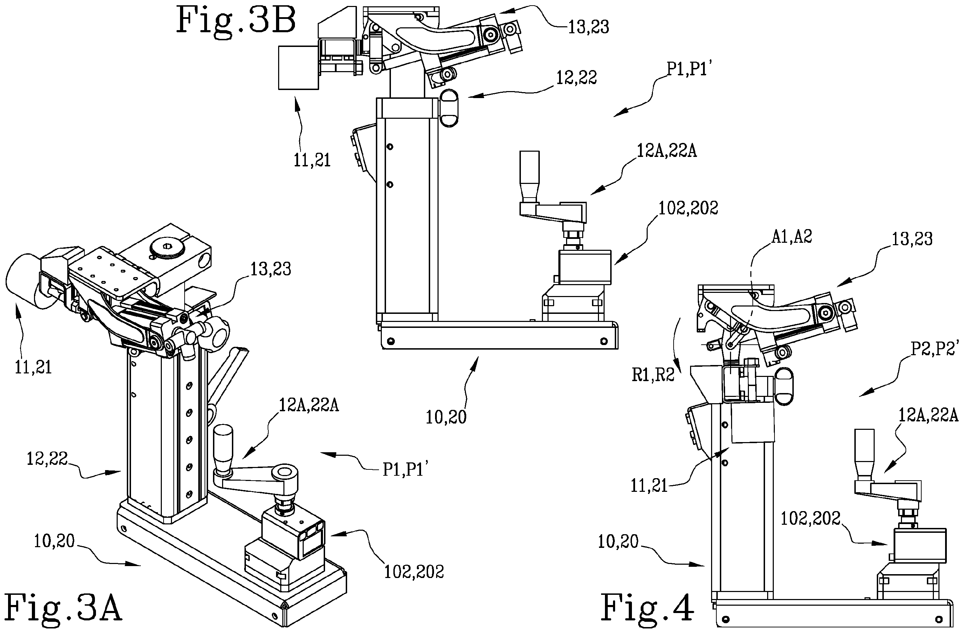

As illustrated in Figures 1 and 4, each unit 10, 20 and 30 preferably comprises a respective actuator 13, 23, 33 which allows the rotations R1, R2 and R3 of the supporting element 11, 21 and of the contact element 31.

According to an embodiment, the actuators 13, 23 and 33 are of the pneumatic type.

According to an embodiment, the first lower contact unit 10 comprises a first detection device 100, the second lower contact unit 20 comprises a second detection device 200 and the lateral contact unit 30 comprises a third detection device 300.

The first, second and third detection devices 100, 200, 300 are configured to detect a position P10, P20 and P30 along the horizontal and/or vertical direction of the first supporting element 11, of the second supporting element 21 and of the lateral reference unit 30 (and consequently of the lateral contact element 31).

According to an embodiment, the sensors may, for example, comprise a magnetic strip and a reading head.

The first detection device 100 comprises a sensor 101, positioned on the first unit 10, for detecting a position along the horizontal direction of the first supporting element 11.

The first detection device 100 comprises a sensor 102, positioned on the first unit 10, for detecting a position along the vertical direction of the first supporting element 11.

The second detection device 200 comprises a sensor 201, positioned on the second unit 20, for detecting a position along the horizontal direction of the second supporting element 21.

The second detection device 100 comprises a sensor 202, positioned on the second unit 20, for detecting a position along the vertical direction of the second supporting element 21.

According to an embodiment, the sensors 102 and 202 are *encoders.*

In particular, the sensors 102 and 202 detect a position along the vertical direction of the first and second supporting elements 11, 21 when they are in the operating position P1, P1 '.

According to an embodiment, the sensors 101, 201 are reading heads which determine the position of the unit 10, 20 relative to a horizontal magnetic strip M1 positioned on the horizontal structure 2.

The third detection device 300 comprises a sensor 301, positioned on the unit 30, for detecting a position along the vertical direction of the lateral contact element 31.

According to an embodiment, the sensor 301 is a reading head which allows the position of the unit 30 to be determined relative to a vertical magnetic strip M2 positioned on the vertical structure 3.

The invention relates to a system 500 for machining a glass sheet.

The system 500 comprises a device 1 for supporting and referencing the sheet according to any of the above-mentioned features and a machine tool 50.

The machine tool 50 comprises:
- a frame 51 for supporting the sheet in a substantially vertical position,
- a device 52 for moving the sheet L being machined along said supporting frame 51 along a feed direction D, which comprises at least one gripping suction cup 53 configured to pick up the sheet L,
- a station 54 for machining the sheet L positioned downstream of the device 1 along the feed direction D.

According to a preferred embodiment, the machine 50 comprises a processing and control unit U.

The unit U is at least in communication with the first, second and third detection devices 100, 200, 300 and is configured to receive the position P10, P20, P30.

The U unit is configured to receive: from the first detection device 100 a coordinate along the horizontal direction and a coordinate along the vertical direction of the first supporting element 11; from the second detection device 200 a coordinate along the horizontal direction and a coordinate along the vertical direction of the second supporting element 21; from the third detection device 300 a coordinate along the vertical direction of the lateral contact element 31.

According to an embodiment, the unit U is in communication with the first and the second unit 10, 20.

The unit U is configured to move the first and second units 10, 20 along the horizontal structure 2.

In particular, the unit U is configured to move the first and second supporting elements 11, 21 along the horizontal direction.

According to an embodiment, the unit U is in communication with the first actuator 12 for moving the first supporting element 11 from the position P10 to a new position P10' along the vertical direction.

In an embodiment, the unit U is in communication with the first actuator 12 and with the second actuator 22 for moving the first and the second supporting elements 11, 21 from the position P10, P20 to a new position P10', P20' along the vertical direction.

According to an embodiment, the unit U is configured for moving the lateral unit 30 from the position P30 to a new position P30' along the vertical direction.

According to an embodiment, the processing and control unit U is in communication with the actuators 13, 23, 33 and is configured for controlling the rotation R1 of the first supporting element 11, the rotation R2 of the second supporting element 21 and the rotation R3 of the contact element 31.

According to an embodiment, the system 500 comprises a handling robot 60 which comprises a body 61, an arm 62 extending from the body and a plurality 63 of suction cups supported by the arm 62.

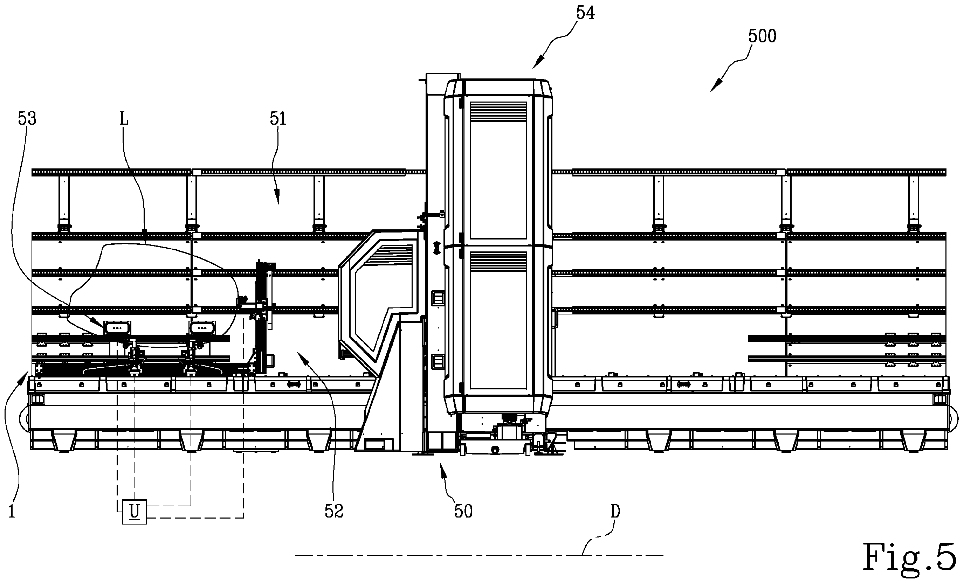

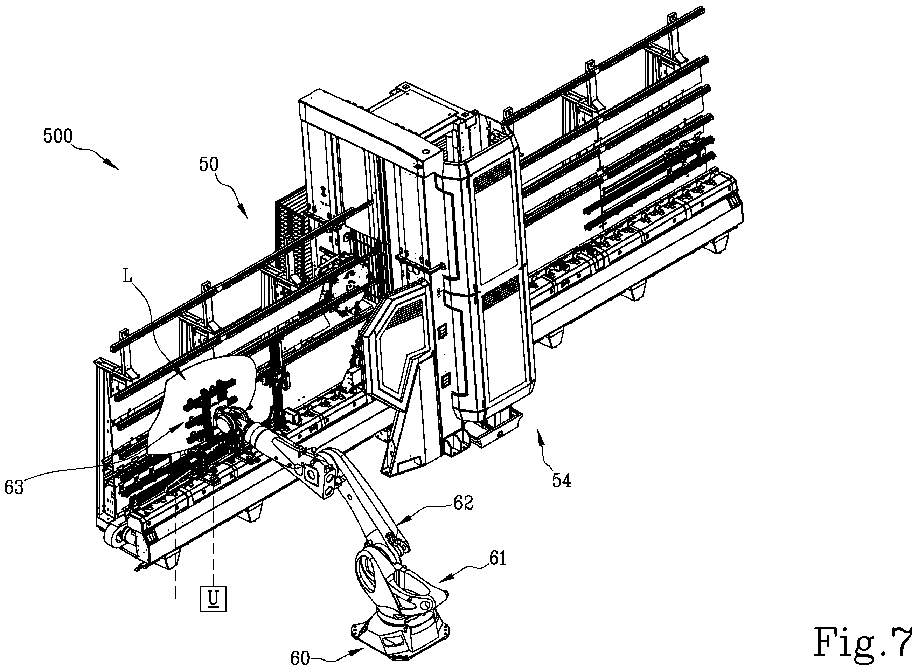

According to an embodiment, the supporting device 1 is positioned on the machine tool 50, as illustrated in Figures 5 to 7.

According to this embodiment, the processing unit U is in communication with the handling robot 60 and is configured for controlling a movement of the arm and an actuation of the plurality 63 of suction cups for positioning, using the handling robot 60, the sheet on the supporting device 1. According to this embodiment, the processing and control unit is therefore in communication at least with the robot 60, with the units 10, 20, 30 of the supporting and referencing device 1 and with the machine tool 50, in particular with the at least one suction cup 53.

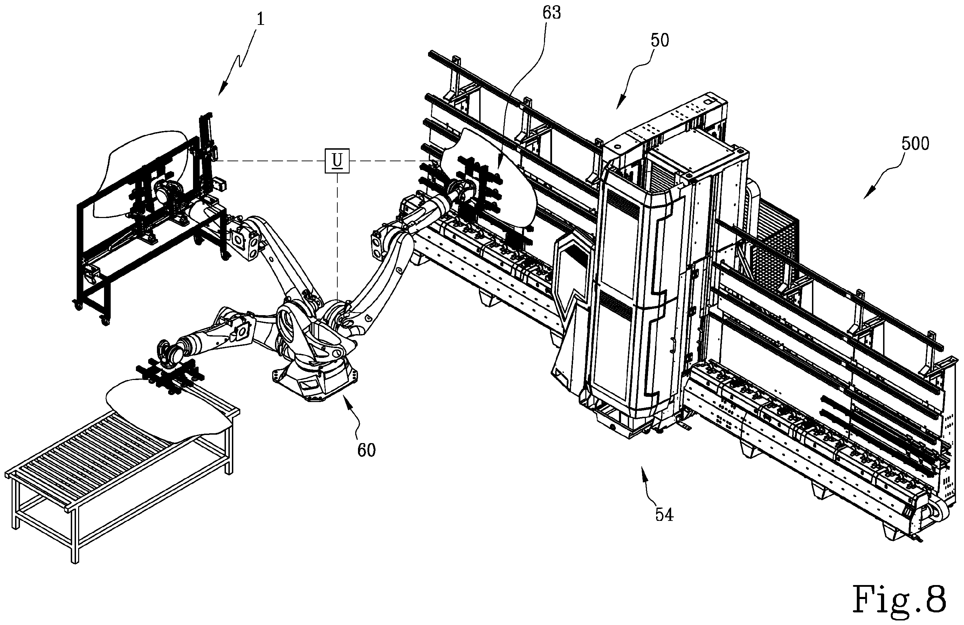

According to an embodiment, the supporting device 1 is positioned close to the machine as illustrated in Figure 8.

According to an embodiment, the processing and control unit U is in communication with the handling robot 60 and is configured to control a movement of the arm 62 and an actuation of the plurality 63 of suction cups for picking up the sheet L from the supporting device 1 and positioning the sheet L against the suction cup 53 of the movement device 52 using the handling robot 60.

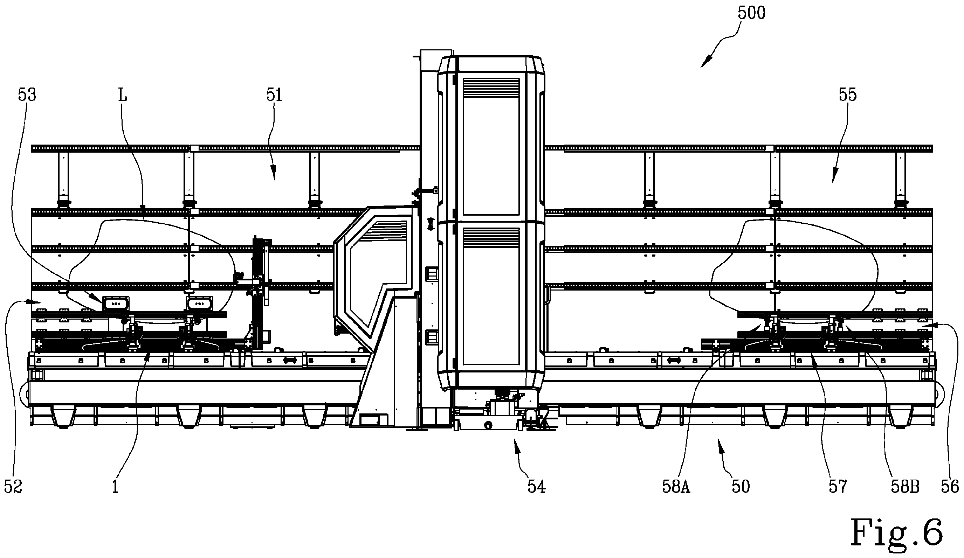

According to an embodiment illustrated in Figure 6, the system 500 may comprise an unloading station 55.

The unloading station 55 may comprise, for example, a device 56 for supporting the sheet positioned downstream of the machining station 54 along the feed direction D for supporting the machined sheet.

The supporting device 56 comprising a horizontal structure 57 equipped with a guide and two lower contact units 58A, 58B movable along the guide, configured to define a support for the machined sheet.

The invention relates to a method for orienting a sheet by means of a system 500 for machining a sheet according to any one of the above-mentioned features, said method comprising the steps of:
- picking up and positioning the sheet L at the supporting and referencing device 1,
- defining an orientation of the sheet L, as a function of said shape s, by means of the supporting and referencing device 1,
- positioning the oriented sheet L against the at least one suction cup 53 configured to retain the sheet L.

According to an embodiment, the method comprises a step of positioning a handling robot 60 comprising a body 61, an arm 62 and a plurality 63 of suction cups.

According to an embodiment, the step of picking up said sheet L and positioning said sheet L at the supporting and referencing device 1 preferably comprises a step of picking up by means of the handling robot 60 the sheet L and releasing it at the supporting and referencing device 1. In an embodiment, the step of positioning the oriented sheet L against the at least one gripping suction cup 53 configured for retaining the sheet L, comprises a step of picking up by means of the handling robot 60 the sheet L from the supporting and referencing device 1 and releasing it against the at least one suction cup 53 of the machine tool 50.

## Claims

1. A device for supporting and referencing a sheet (L) having a predetermined shape (s) and positioned along a substantially vertical direction, said device comprising:
- a vertical support (3) extending along the vertical direction,
- a lateral reference unit (30) connected to the vertical support (3),
- a horizontal support (2) extending along a horizontal direction,
- a first lower contact unit (10) connected to the horizontal support and comprising a first supporting element (11),
- a second lower contact unit (20) connected to the horizontal support (2) and comprising a second supporting element (21),
the first and second supporting elements (11, 21) being configured to make contact, respectively, with a first and a second lower portion (s1, s2) of the edge of the sheet (L),
the first and the second supporting elements (11, 21) and the lateral reference unit (30) define an orientation of the sheet (L) as a function of said shape (s), wherein the horizontal support (2) comprises a horizontal guide (4) extending along the horizontal direction and wherein said first and second lower contact units (10,20) are movable along the horizontal guide (4).

2. The device according to claim 1, wherein the lateral reference unit (30) comprises an electronic reading device configured to define a positioning of the sheet
and/or wherein the lateral reference unit (30) comprises a contact element (31) configured to come into contact with a lateral portion (s3) of an edge of the sheet (L)
and/or wherein the vertical support (3) comprises a vertical guide (5) extending along the vertical direction and said lateral reference unit (30) is movable along the vertical guide.

3. The device according to any one of the preceding claims, wherein at least one between the first and the second supporting elements (11, 21) is movable along the vertical direction.

4. The device according to claim 3, wherein the first lower contact unit (10) comprises a first actuator (12) for moving said first supporting element (11) along the vertical direction and/or the second lower contact unit (21) comprises a second actuator (22) for moving said second supporting element (21) along the vertical direction.

5. The device according to any one of the preceding claims, wherein at least the first supporting element (11) is movable between a first operating position (P1) at which it is positioned in such a way as to allow a supporting of the sheet (L) and a first non-operating position (P2) at which it is positioned in such a way as to determine a minimum overall size.

6. The device according to claim 85 wherein said first supporting element (11) is movable between the first operating position (P1) and the first non-operating position (P2) by means of a first rotation (R1) or a first roto-translation.

7. The device according to any one of the preceding claims, wherein the contact element (31) is movable between a second operating position (P3) at which it is positioned in such a way as to allow a lateral contact of the sheet (L) and a second non-operating position (P4) at which it is positioned in such a way as to determine a minimum overall size.

8. The device according to claim 7, wherein said contact element (31) is movable between the second operating position (P3) and the second non-operating position (P4) by means of a second rotation (R3).

9. The device according to any of the preceding claims, wherein the first and second lower contact units (10, 20) and the lateral reference unit (30) respectively comprise a first and a second and a third detecting device configured to detect, respectively, a position (P10, P20, P30) of the first supporting element (11), of the second supporting element (21) and of the lateral reference unit (30).

10. A system for machining a sheet (L) comprising:
a device (1) for supporting and referencing the sheet (L) according to any one of claims 1 to 9;
a machine tool (50) comprising:
- a frame (51) for supporting the sheet (L) in a substantially vertical position,
- a device (52) for moving the sheet (L) being machined along said supporting frame (51) along a feed direction (D), said movement system comprising at least one gripping suction cup (53) configured to retain the sheet (L),
- a station (54) for machining said sheet (L) positioned downstream of the supporting and referencing device (1) along the feed direction (D).

11. The system according to claim 10, wherein the machine tool (50) comprises a processing and control unit (U) and wherein the first and second lower contact units (10, 20) and the lateral reference unit (30) respectively comprise a first and a third detection device (100, 200, 300) configured for detecting, respectively, a position (P10, P20, P30) along the horizontal direction and/or along the vertical direction of the first supporting element (11), of the second supporting member (21) and of the lateral reference unit (30),
the processing and control unit (U) being in communication with the first, second and third detection devices and being configured to receive the position (P10, P20, P30).

12. The system according to claim 11, wherein the first lower contact unit (10) comprises a first actuator (12) for moving said first supporting element (11) along the vertical direction and/or the second lower contact unit (20) comprises a second actuator (22) for moving said second supporting element (21) along the vertical direction,
the processing unit (U) being in communication with the first and/or with the second actuator (12, 22) for moving the first and/or the second supporting element (11, 21) from the position (P10, P20) to a new position (P10', P20') along the vertical direction.

13. The system according to claim 11 or 12, wherein at least the first supporting element (11) and/or the second supporting element are movable between a first operating position (P1, P1') and a first non-operating position (P2, P2') by means, respectively, of a first rotation (R1) and a second rotation (R2), the processing and control unit (U) being configured to control said first and second rotation (R1, R2).

14. The system according to any one of claims 11 to 13, wherein the lateral reference unit (30) comprises a contact element (31) configured to come into contact with a lateral portion (s3) of an edge of the sheet (L) and to define a positioning of the sheet (L), the contact element (31) being movable between a second operating position (P3) and the second non-operating position (P4) by means of a third rotation (R3), the processing and control unit (U) being configured to control said third rotation (R3) and/or wherein the supporting and referencing device (1) is positioned on the machine tool (50).

15. The system according to any one of claims 10 to 14, comprising a handling robot (60) comprising a body (61), an arm (62) extending from the body and a plurality (63) of suction cups supported by the arm (62), the processing and control unit (U) being in communication with said handling robot (60) and being designed to control a movement of the arm (62) and an actuation of the plurality (63) of suction cups for positioning, using said handling robot (60), the sheet (L) on the supporting and referencing device (1).

16. The system according to any one of claims 10 to 14, wherein the supporting and referencing device (1) is positioned close to the machine tool (50).

17. The system according to claim 16, comprising a handling robot (60) comprising a body (61), an arm (62) and a plurality (63) of suction cups, the processing and control unit (U) being in communication with said handling robot (60) and being configured to control a movement of the arm (62) and an actuation of the plurality (63) of suction cups for picking up the sheet (L) from the supporting device and positioning the sheet (L) against the at least one suction cup (53) of the movement device (52) using said handling robot (60).

18. A method for orienting a sheet (L) having a predetermined shape (s) by means of a system according to any one of claims 10 to 17, said method comprising the steps of:
- picking up and positioning said sheet (L) at the supporting and referencing device (1),
- defining an orientation of the sheet (L) as a function of said shape (s) by means of the supporting and referencing device (1),
- positioning the oriented sheet (L) against the at least one suction cup (53) configured to retain the sheet (L).

19. The method according to claim 18, comprising a step of positioning a handling robot (60) comprising a body (61), an arm (62) and a plurality (63) of suction cups,
wherein the step of picking up the sheet (L) and positioning said sheet (L) at the supporting and referencing device (1) comprises a step of picking up by means of the handling robot (60) the sheet (L) and releasing it at the supporting and referencing device (1).

20. The method according to claim 19, comprising a step of positioning a handling robot (60) comprising a body (61), an arm (62) and a plurality (63) of suction cups,
wherein the step of positioning the oriented sheet (L) against the at least one gripping suction cup (53) configured for retaining the sheet (L), comprises a step of picking up by means of the handling robot (60) the sheet (L) from the supporting and referencing device (1) and releasing it against the at least one suction cup (53) of the machine tool (50).
